Europäisches Patentamt

European Patent Office

Office européen des brevets

(11) Publication number: **0 093 222**
A1

# EUROPEAN PATENT APPLICATION

(21) Application number: 82830113.5

(22) Date of filing: 28.04.82

(51) Int. Cl.³: **B 62 M 7/00**

(43) Date of publication of application:
09.11.83 Bulletin 83·45

(84) Designated Contracting States:
AT BE CH DE FR GB IT LI LU NL SE

(71) Applicant: Ditta BERNARDI MOZZI MOTOR S.p.A.
Via Garibaldi, 29
Zola Predosa I-40069 Bologna(IT)

(72) Inventor: Paride, Bernardi
Via Porrettana, 20/2
Casalecchio di Reno Bologna(IT)

(74) Representative: Sassatelli, Franco T.
c/o INIP Via Mazzini N. 170
I-40139 Bologna(IT)

(54) Device for bicycle motorization.

(57) The invention allows a device to be supported in an integral way of the bicycle frame and directly transmits the motion impressed by the motor assembly, by means of half-parts to be engaged on order, on a pinion permanently engaged in a rack fitted on the wheel. The pinion and tyre rim components with rack are foreseen in polymer resins, materials with high elasticity and resistance to friction.

EP 0 093 222 A1

- 1 -

"Device for bicycle motorization".

The invention refers to a device for motorizing the bicycle, which substantially foresees transmission half-parts, to be inserted on command, of motor assembly sup ported in an integral way on the frame bottom permanently engaged in a rack fitted on the inner border of correspondence of the back wheel rim. To the pinion two movements can in this way be imposed: one of the wheel traction in engaged condition by the motor assembly and an idle one imposed by the wheel with transmission half-parts disengaged by means of the pedals. The bicycle with motor assembly to be engaged allows an employ versatility and substantially reduces the manufacturing and employ costs in comparison with the cyclomotors.

These devices foresee a motor assembly with mobile articulation below the frame to allow two employ positions: an engaged one, in which a roller with transversal position is brought against the tyre·cover and lets it turn by friction, and the other in detached position. This proceeding has several inconveniences: difficulties of operation in the case of wet road surface, since the roller slides on the cover, and heavy waste of tyre cover owing to friction. In addition, the mobile articulated support requires damping and oscillating means and causes an intrinsec organolectic fragility.

The invention permits a device to be supported in an integral way on the frame, directlytransmitting motion as impressed by the motor assembly, through half-parts to be engaged on command on a pinion permanently engaged in the rack fitted on the wheel. The pinion an rim components with rack are foreseen in polymer resins, materials with high elasticity and friction resistance.

A motor assembly is employed which transmits to coupling-pulley with control to be engaged in a shaft on which a pinion is constantly engaged in a rack fitted on the inner correspondence border of the back wheel rim. Engagement is controlled by means of a pushbutton which axially shifts a self-lubricated cylinder on the pinion bearing shaft: consequently, a ball, which was previosly positionned in an integrative cavity of the two shaft coaxial components, gets out on a slide partially and engages in another cavity of the coupling-pulley thus dermining the movement transmission from this one to the pinion-bearing shaft. When the control is disactivated, the ball enters again into its seat and disengages the two transmission components: the vehicle can thus be used by means of the pedals, while the pinion is idling.

To prevent the inversed rotation of the pinion, which would be caused by the pedals in the engagement phase, an idle wheel bearing is foreseen between the transmission socket and pinion supporting shaft, operating as directional check. Between distance pieces, a longitudinal parallel set of small rollers is employed lea ring on differently shaped half-seats of the containment cylinder. A slightly coni cal surface prevents from motion in its sense by gradual reduction of the rotatio space, and the other, with natural bending, allows the free rotation.

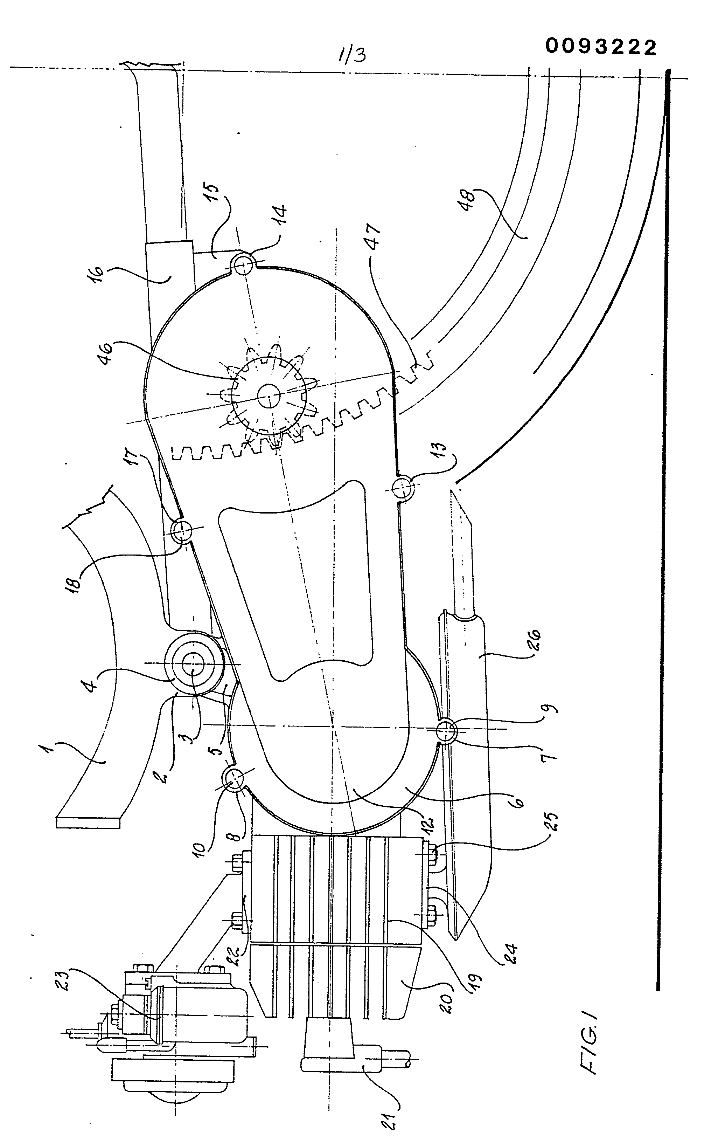

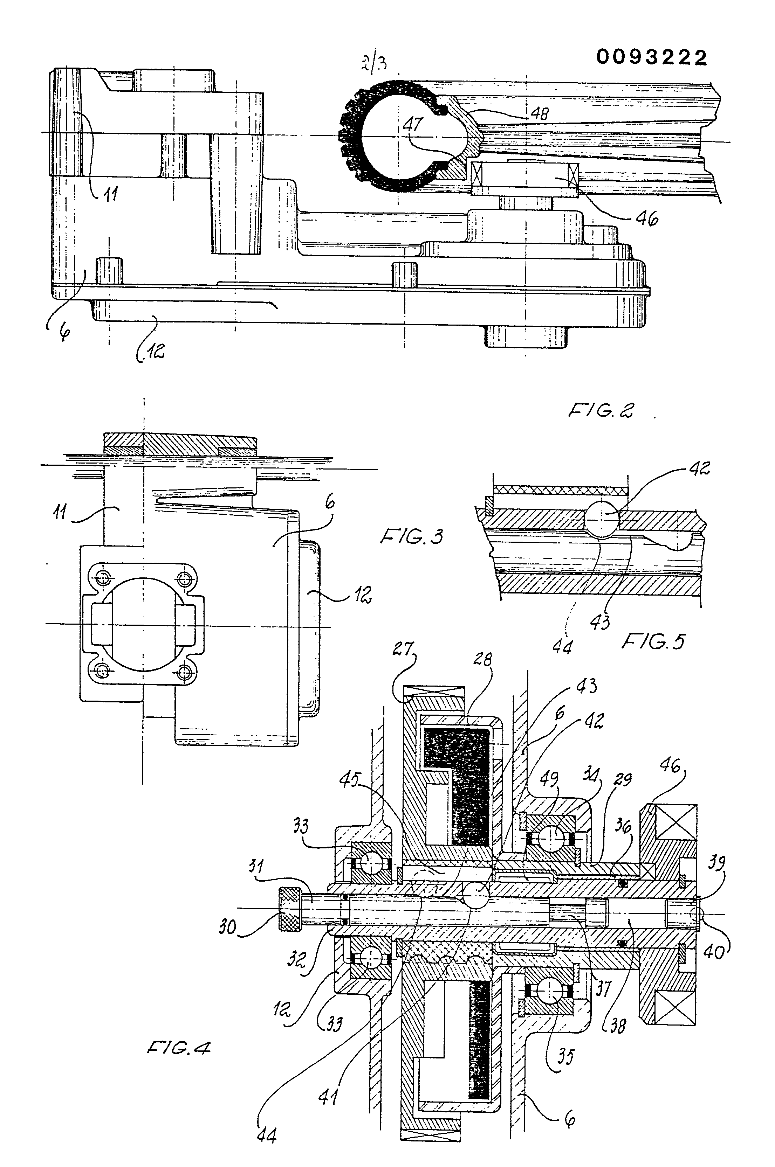

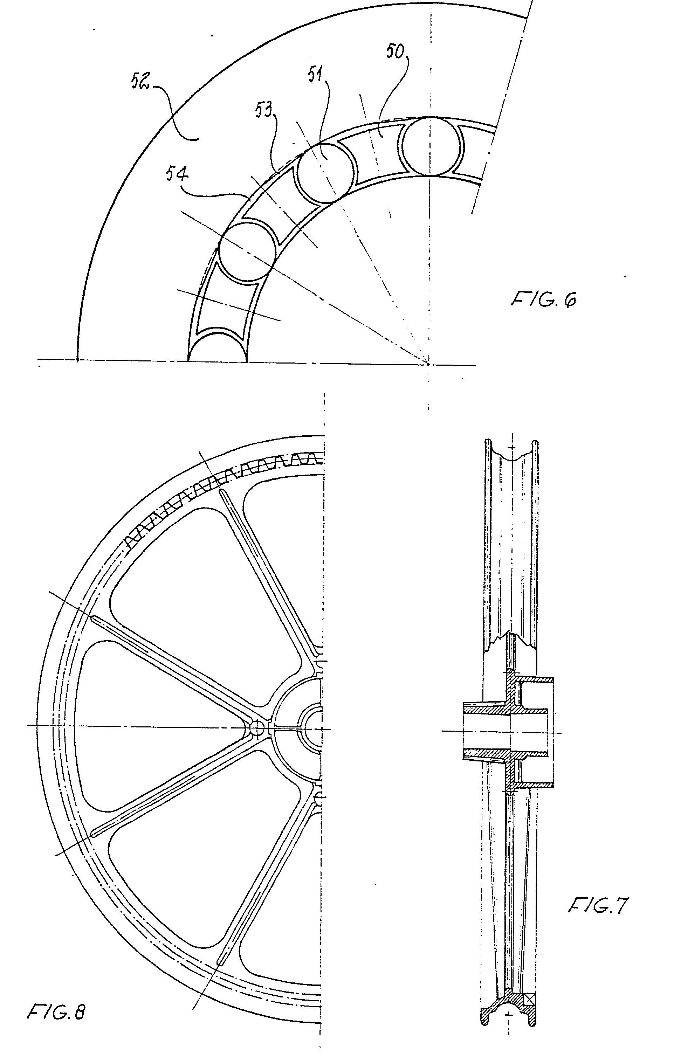

A not limiting version of the system execution is illustrated by the drawings of Tables 1, 2 and 3 where fig. 1 is the outer side view of the device supported on the frame showing, with dashed lines, the two movement organs of the back wheel. Fig. 2 is the view of the same from above, showing the pinion engaging in the rack in the inside edge of the rim which can be seen in section. Fig. 3 is the partial view of the device. Fig. 4 is the londitudinal section of the transmission assembly in disengaged position. Fig. 5 is a particular of the previous figure section for showing the engaging phase to be obtained by shifting the control pushbutton causing the partial getting out of the engagement ball from the shaft of the pinion on the track above the glide. Fig. 6 is the sector of the bea ring transversal section with idle wheel, equipped with non-return system. Fig. 7 is a section of the wheel equipped with the rack. Fig. 8 is a side view of the wheel half-part as per fig. 7. The assembly is supported by tubular frame 1 on two parts: the front one employs, on ear-shaped parts 2, pivot 3 borne by anti-vibration coaxial part 4 which supports ribbed arm 5. The motor assembly 6 is fib

ed on parts 7 and 8 by means of screws 9 and 10, of which the former (9) blocks the components and 11, while screw 10 blocks chain guard 12 on guard 6. This part is additionally sopported by parts 13 and 14 on support 15 of frame 16, and part 17 to frame 16 by means of screws 18. The vanes of cylinder 19 and head 20 have been foreseen, as well as cover 21 of ignition plug and support 22 of carburettor 23. Below, on face 24 and nuts 25, silencer 26 is fitted. The motor assembly drives clutch-pulley 27 on clutch bell 28 contained in structure 6 and bearing the transmission socket 29. The engagement is performed by pushbutton 30 which lets cylinder 31 advance in shaft 32 borne in structure 12 by means of the supporting couple 32 and 33, and by structure 6 through sockets 29 sustained on radial seal bearing 34 and 35 and supporting bearing 36.

Cylinder 31 is with self-lubricating movement and employs shaft 37 which is moved pumping effect in space 38 the bottom of which is closed by plug 39 with grease nipple 40 containing a solution of molibdene grease.

The forward movement of axial part 31 lets ball 42 come out from its seat on the lower part of glide 42, and the ball reaches the upper part 43 shifted into bore 44 of shaft 32, from which it partially rises engaging in this way in longitudinal slot 42 of clutch-pulley 27, thus determining the integral connection of the transmission half-parts which set pinion 46 keyed on 32 in rotation and consequently, engaged in rack 47 of rim 48, lets the bicycle advance.

The pinion is prevented from rotating in the inversed sense, which would be caused by the pedals in the engagement phase, by an idle wheel bearing 49 mounted between the transmission socket and the shaft with pinion. Between distance pieces 50, the set of small rollers 51 is employed fitted on containment cylinder 52 on flat half-seats with slight conicity 53 which act as non-return device by reducing the rotation space gradually and with natural curving 54 which allows the rotations in the correct sense.

The particular of execution, the materials, the shape fo the device body, the supporting means, as well as everything else on order may be carried out in different ways.

0093222

Claims.

1) Device for bicycle motorization, characterized by the fact that permits a device to be supported in an integral way on the frame, directly transmitting motion as impressed by the motor assembly, through half-parts to be engaged on command on a pinion permanently engaged in the rack fitted on the wheel. The pinion as rim components with rack are foreseen in polymer resins, material with high elesticity and friction resistance.

2) Device for bicycle motorization, according to the previous claim, characterized by the fact that a motor assembly is employed which transmits to coupling-pulley with control to be engaged in a shaft on which a pinion is constantly engaged in a rack fitted on the inner correspondence border of the back wheel rim. Engagement is controlled by means of a pushbuttom which axially shifts a self-lubricated cylinder on the pinion bearing shaft: consequently, a ball, which was previously positioned in an integrative cavity of the two shaft coaxial components, gets out on a slide partially and engages in another cavity of the coupling-pulley thus detrmining the movement transmission from this one to the pinion-bearin shaft. When the control is disactivated, the ball enters again into its seat and disengages the two transmission components: the vehicle can thus be used by mean of the pedals, while the pinion is idling.

3) Device for bicycle motorization, according to the previous claims, characterized by the fact that to prevent the inversed rotation of the pinion, which would be caused by the pedal in the engagement phase, an idle wheel bearing is foreseen between the transmission socket and pinion supporting shaft, operating as directional check. Between distance pieces, a longitudinal parallel set of small rollers is employd leaning on differently shaped half-seats of the containment cylinder. A slightly conical surface prevents from motion in its sense by gradu reduction of the rotation space, and the other, with natural bending, allows th free rotation.

4) Device for bicycle motorization, according to the previous claims, character zed by the fact that it is supported by tubular frame 1 on two parts: the front one empploys, on ear-shaped parts 2, pivot 3 borne by anti-vibration coaxial p 4 which supports ribbed arm 5. The motor assembly 6 is fixed on part 7 and 8 by means of screws 9 and 10, of which the former (9) blocks the components and 11, while screw 10 blocks chain guard 12 on guard 6. This part is additionally supported by parts 13 and 14 on support 15 of frame 16, and part 17 to frame 16 by means of screws 18. The vanes of cylinder 19 and head 20 have been foreseen as wekk as civer 21 of ignition plug and support 22 of carburettor 23. Below, on face 24 and nuts 25 silencer 26 is fitted.

5) Device for bicycle motorization, according to the previous claims, characterized by the fact that the motor assembly drives clutch-pulley 27 on clutch bell 28 contained in structure 6 and bearing the transmission-socket 29. The engagement is performed by pushbuttom 30 which lets cylinder 31 advance in shaft 32 borne in structure 12 by means of the supporting bearing couple 32 and 33, and by structure 6 through soclets 29 sustained on radial sial bearings 34 and 35 and supporting bearing 36.

6) Device for bicycle motorization, according to the previous claims, characterized by the fact that the cylinder 31 is with self-lubrificating movement and employs shast 37 which is moved with pumping effect in space 38 the bottom of which is closed by plug 39 with grease nipple 40 containing a solution fo molibdene grease.

7) Device for bicycle motorization, according to the previous claims, characterized by the fact that the forward movement of axial part 31 lets ball 42 come out from its seant on the lower part of glide 42, and the ball reaches the upper part 43 shifted into bore 44 of shaft 32, from which it partially rises engaging in this way in longitudinal slot 42 of clutch-pulley 27, thus determining the integral connection of the transmission half-parts which set pinion 46 keyed on 32 in rotation and consequently, engaged in rack 47 of rim 48, lets the bicycle advance.

8) Device for bicycle motorization, according to the previous claims, characterized by the fact that the pinion is prevented from rotating in the inversed sense, which would be caused by the pedals in the engagement phase, by an idle wheel bearing 49 mounted between the transmission socket and the shaft with pinion. Between distance pieces 50, the set of small rollers 51 is employed fitted on

0093222

containment cylinder 52 on flat half-seats with slight conicity 53 which act
as non-return device by reducing the rotation space gradually and with natural curving 54 which allows the rotation in the correct sense.

FIG.1

1/3

0093222

0093222

FIG.2

FIG.3

FIG.5

FIG.4

FIG. 6

FIG.7

FIG.8

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A- 630 495 (FARINELLI) <br> * Figure 4; lines 54-81 * | 1-2,7 | B 62 M 7/00 |
| A | FR-A-1 044 319 (BRIBAN) <br> * Page 2, lines 13-22; figures 3-5 * | 1-2,7 | |
| A | US-A-3 361 004 (WILLIAMS) <br> * Whole document * | 1 | |
| A | DE-A-1 605 776 (OTTERBACH) <br><br> * Figure 2; page 4, first paragraph * | | |
| A | FR-A- 619 086 (PORTAFAIX) <br> * Whole document * | 1 | TECHNICAL FIELDS SEARCHED (Int. Cl. ³) |
| A | DE-B-1 064 832 (RUESS) <br> * Page 1, lines 32-48 * | 4 | B 62 M |
| A | GB-A- 636 124 (A.B.G.) <br> * Figure 4; page 2, lines 31-58 * | 5 | |
| A | GB-A- 524 355 (FICHTEL & SACHS) | | |
| A | GB-A- 718 290 (KREIDLER) | | |
| | --- -/- | | |

The present search report has been drawn up for all claims

| Place of search | Date of completion of the search | Examiner |
|---|---|---|
| THE HAGUE | 15-08-1983 | GEMMELL R.I.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03.82